# EUROPÄISCHE PATENTANMELDUNG

(11) **EP 0 827 295 A2**
(43) Veröffentlichungstag der Anmeldung: **04.03.1998**
(21) Anmeldenummer: 97113047.1
(22) Anmeldetag: 29.07.1997
(51) Int. Cl.: H04B 7/26

(54) **Verfahren zum Belegen von mehreren aufeinanderfolgenden Zeitschlitzen in drahtlosen Kommunikationsnetzen**

(30) Priorität: 30.08.1996 DE 19635328
(71) Anmelder: SIEMENS AKTIENGESELLSCHAFT, 80333 München (DE)
(72) Erfinder: Sibila, Arnd, 80999 München (DE)

(57) **Zusammenfassung**

In den Basisstationen (BS) von drahtlosen Kommunikationsnetzen - DECT, GAP, GSM - wird bei einer Funkverbindung bei einer Belegung von zumindest zwei aufeinanderfolgenden Zeitschlitzen (ZS) durch ein Kommunikationsendgerät (KE) mit Hilfe der Basisstationen (BS) zusätzlich ein den belegten Zeitschlitzen (ZS) vorhergehender und nachfolgender Zeitschlitz (ZS) blockiert und am Funkverbindungsende wieder freigegeben. Durch das dynamischen Blockieren von Zeitschlitzen (ZS) ist eine effektivere Nutzung der verfügbaren Zeitschlitze (ZS) und eine zusammenhängende Belegung von zumindest zwei Zeitschlitzen (ZS) möglich.

## Beschreibung

Drahtlose Kommunikationsnetze - z.B. Mobilfunk- und Schnurlos- Kommunikationsnetze - mit mehreren Basisstationen und drahtlos angeschlossenen Kommunikationsendgeräten werden häufig gemäß dem standardisierten FDMA- (Frequency Division Multiple Access), dem TDMA- (Time Division Multiple Access) oder dem CDMA-Verfahren (Code Division Multiple Access) realisiert. Eine optimale Nutzung von Übertragungskanälen zwischen den Basisstationen und den drahtlos angeschlossenen Kommunikationsendgeräten wird innerhalb eines definierten Funkbereichs einer Basisstation erreicht. Ein Überschreiten dieses definierten Funkbereichs bedeutet längere Laufzeiten auf der Funkstrecke, die insbesondere Laufzeitprobleme an den Übertragungskanalgrenzen verursachen können. Durch diese durch die längeren Laufzeiten verursachten zeitlichen Abweichungen können gegenseitige Störbeeinflussungen der Zeitschlitze bzw. Übertragungskanäle entstehen.

Um auftretende, gegenseitige Störbeeinflussungen bei asynchronen Basisstationen zu vermindern, wurde in der WO 94/ 10 811 vorgeschlagen, insbesondere bei nach dem FDMA- bzw. TDMA-Verfahren wirkenden, drahtlosen Kommunikationsnetzen, aus den verfügbaren Zeitschlitzen bzw. Übertragungskanälen nur eine Teilmenge nicht unmittelbar aufeinanderfolgender Zeitschlitze für die Funkverbindungen, insbesondere nur jeden zweiten Zeitschlitz, auszuwählen. Diese auch im DECT-Standard angegebene starre Aufteilung in belegbare und blockierte Zeitschlitzen vermindert zwar die gegenseitige Störbeeinflussung von Zeitschlitzen bzw. Nachrichtenkanälen, jedoch wird die Nutzung der Nachrichtenkanäle erheblich vermindert.

Die der Erfindung zugrundeliegende Aufgabe besteht darin, die Nutzung von Nachrichtenkanälen des eingangs erläuterten drahtlosen Kommunikationsnetzes zu verbessern. Die Aufgabe wird ausgehend von einem drahtlosen Kommunikationsnetz gemäß den Merkmalen des Oberbegriffs des Patentanspruchs 1 durch dessen kennzeichnende Merkmale gelöst.

Der wesentliche Aspekt des erfindungsgemäßen Verfahrens besteht darin, daß bei einer Funkverbindung bei einer von einem Kommunikationsendgerät initialisierten Belegung von zumindest zwei aufeinanderfolgenden Zeitschlitzen mit Hilfe der Basisstationen zusätzlich ein den belegten Zeitschlitzen vorhergehender und ein nachfolgender Zeitschlitz blockiert wird.. Eine Blockierung eines Zeitschlitzes bedeutet, daß dieser nicht mehr beispielsweise durch weitere Kommunikationsendgeräte belegt werden kann. Dies bedeutet, daß für von Kommunikationsendgeräten vorgesehenen Funkverbindungen, bei denen beispielsweise Daten oder Informationen mit mehr als 32 kbit/s zu übertragen sind - beispielsweise bei einer 64 kbit/s - Datenverbindung -, von diesem die benötigten Zeitschlitze, d.h. mindestens zwei, in der jeweiligen Funkverbindung in unmittelbarer Reihenfolge belegt werden, wobei mit Hilfe der Basisstationen zusätzlich der vorhergehende und nachfolgende Zeitschlitz blockiert wird. Erfindungsgemäß werden die blockierten Zeitschlitze am Ende einer Funkverbindung wieder freigegeben - Anspruch 2. Durch dieses dynamische Blockieren von Zeitschlitzen für die Dauer einer Funkverbindung können die verfügbaren Zeitschlitze in einem Funkbereich gegenüber der bekannten starren Aufteilung in blockierte und belegbare Zeitschlitze erheblich effektiver genutzt werden. Das erfindungsgemäße Verfahren eignet sich folglich insbesondere für Funkverbindungen mit höheren Datenraten, d.h. größer 32 kbit/s.

Gemäß einer Weiterbildung des erfindungsgemäßen Verfahrens wird die Blockierung eines Zeitschlitzes vor und nach einem zugeteilten Zeitschlitz durch eine DECT-orientierte Blind Slot Information - Rundsendemeldung in dem jeweiligen Funkbereich mitgeteilt - Anspruch 3. Durch die Verwendung einer standardisierten Blind Slot Information - Meldung ist keine Änderung des DECT-Standards erforderlich.

Im folgenden wird das erfindungsgemäße Verfahren anhand dreier Blockschaltbilder näher erläutert. Dabei zeigen
- FIG 1: in einem Blockschaltbild eine Kommunikationsanordnung zur Realisierung des erfindungsgemäßen Verfahren,
- FIG 2: in einem Blockschaltbild den Aufbau eines TDMA- Rahmens und
- FIG 3: in einem Blockschaltbild einen Zeitrahmen mit der erfindungsgemäßen Blockierung von Zeitschlitzen.

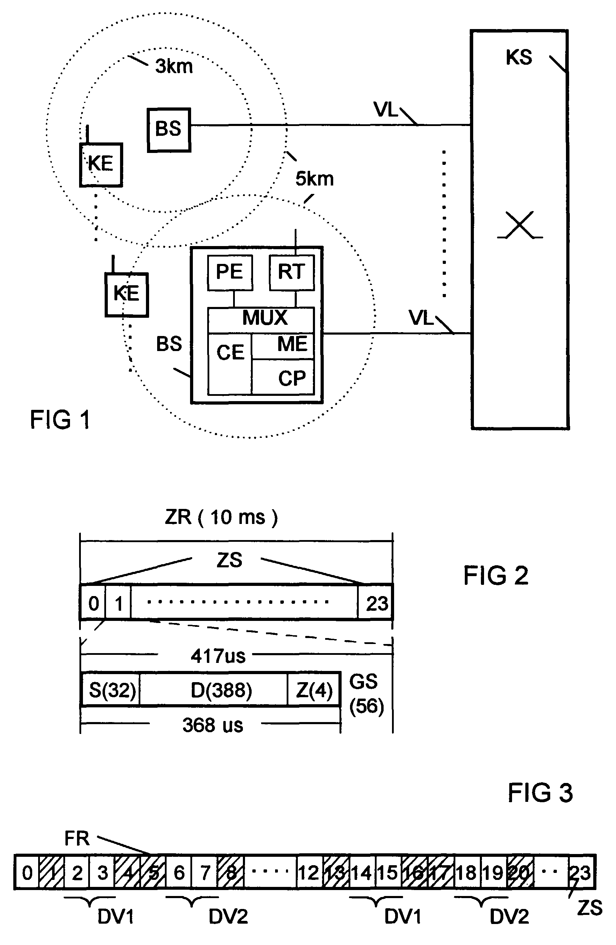

FIG 1 zeigt ein Kommunikationsnetz, das durch zumindest ein Kommunikationssystem KS gebildet ist. Das Kommunikationssystem KS ist über Verbindungsleitungen VL mit Basisstationen BS verbunden, wobei zur Erläuterung des erfindungsgemäßen Verfahrens lediglich zwei Basisstationen BS dargestellt sind. An die Basisstationen BS sind drahtlos Kommunikationsendgeräte KE angeschlossen, wobei die Luftschnittstelle gemäß dem DECT-Standard realisiert ist. Die Erfindung ist jedoch nicht auf diesen Standard beschränkt, sondern kann bei zeitschlitzorientierten, drahtlosen Kommunikationsnetzen, die beispielsweise gemaß anderen Standards wie GAP (Generic Access Profil) oder GSM- oder CT2- Standard ausgestaltet sind, eingesetzt werden.

Die Basisstationen sowie die drahtlos angeschlossenen Kommunikationsendgeräte KE sind beispielsweise wie in 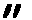 Telcom Report 10, 1987, Heft 2, Seiten 130 ff., 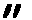 Auch ohne Schnur auf Draht" von W., Klaus und in DECT-Standard 300 175, 1991 beschrieben, realisiert. Hierbei sind die Basisstationen BS sowie die drahtlos angeschlossenen Kommunikationsendgeräte KE gleichartig strukturiert, d.h. weisen einen Funkteil RT auf, der über einen Multiplexer MUX mit peripheren Elementen PE verbunden ist - ist in FIG 1 nur in einer der beiden Basisstationen BS dargestellt. Die einzelnen Komponenten RT,PE und insbesondere der Multiplexer MUX werden von einer Steuereinrichtung CE koordiniert bzw. gesteuert. Das Funkteil RT weist zur Übertragung und zum Empfang von Funksignalen (z.B. TDMA- oder CDMA- Funksignale) zumindest eine Antenne auf. Der Funkteil FT enthält des weiteren Sender- und Empfängerkomponenten zum Empfang und Senden von DECT- oder CDMA- und von FDMA-orientierten Funksignalen. Im Multiplexer MUX werden beispielsweise 1,152 Mbit/s-Daten im DECT- Burstformat erzeugt und empfangen. Des weiteren werden für über die Basisstationen BS geführten Kommunikationsverbindungen, d.h. Sprach- und Datenverbindungen, beispielsweise gemäß dem TDMA- oder CDMA-Verfahren Datenpakete gebildet. Die peripheren Einrichtungen PE können beispielsweise ein Mikrofon, eine Piezo-Hörkapsel, einen Akkumulator, eine Tastatur sowie NF- und Tonrufverstärker umfassen.

Ein in der Steuereinrichtung CE implementiertes Steuerungsprogramm CP ist in derart ausgestaltet, daß aus den verfügbaren Zeitschlitzen ZS (FIG 2) bei einer aufzubauenden Funkverbindung bei einer von einem Kommunikationsendgerät KE initialisierten Belegung von zumindest zwei aufeinanderfolgenden Zeitschlitzen ZS mit Hilfe der Basisstationen BS zusätzlich ein den belegten Zeitschlitzen ZS vorhergehender und ein nachfolgender Zeitschlitz ZS blockiert wird.

Gemäß dem DECT-Verfahren treten in einem Umkreis von ca. 3 km keine, durch Laufzeiten verursachte gegenseitigen Störbeeinflussungen von benachbarten Zeitschlitzen bzw. Übertragungskanälen auf - in FIG 1 durch einen punktierten Kreis mit der Bezeichnung 3 km angedeutet. Der Einsatz von DECT- oder CDMA-Kommunikationsnetzen soll jedoch auf ca. einem 5 km- Umkreis erweitert werden, wobei in dem größer als 3 km entfernten Bereich aufgrund der unterschiedlichen Laufzeiten der Funksignale zwischen den Basisstationen BS und den Kommunikationsendgeräten gegenseitige Störbeeinflussungen von benachbarten Zeitschlitzen auftreten. Zur Vermeidung dieser Störbeeinflussungen und einer optimaleren Nutzung der Zeitschlitze ist die erfindungsgemäße Belegung von Zeitschlitzen vorgesehen.

FIG 2 zeigt einen DECT-spezifischen TDMA-Rahmen für Schnurlos-Kommunikationsanordnungen. Hierbei ist eine dynamische Kanalauswahl von 120 verfügbaren Übertragnngskanälen bzw. Zeitschlitzen ZS möglich. Die 120 Zeitschlitze ZS ergeben sich DECT-gemäß durch zehn Frequenzbänder zwischen 1,8 und 1,9 GHz, wobei in FIG 2 die Zeitschlitzstruktur eines der gleichartig konzipierten Frequenzbänder dargestellt ist. Im Zeitmultiplexrahmen ZR von 10 ms sind 24 Zeitschlitze ZS bzw. Übertragungskanäle definiert. Dieses Rahmenschema wird derart angewandt, daß 12 bidirektional gerichtete Verbindungen - z.B. Telefonieverbindungen für jedes Frequenzband - zwischen einer Basisstation BS und drahtlos angeschlossenen Kommunikationsendgeräten KE gleichzeitig eingerichtet werden können. Ein Zeitschlitz ZS umfaßt 417 µs, in dem ein Zeitrahmen bzw. Impuls (Burst) von 368 µs mit einer Rahmenlänge von 424 Bit mit einem Datendurchsatz von 42 kbit/s übertragen wird. Dies bedeutet, daß in einem Zeitschlitz ZS eine komprimierte Sprachverbindung oder Daten mit einer Übermittlungsraten von 32 kbit/s übertragen werden können. Die 424 Bit sind DECT-gemäß in ein S-Feld von 32 Bit, ein D-Feld mit 388 Bit und ein Z-Feld von 4 Bit unterteilt. Am Ende des Zeitrahmen ist ein Sicherheitszeitrahmen GS mit 56 Bit zur Vermeidung von Überlappungen durch angrenzende Zeitschlitze ZS und damit zur Vermeidung von gegenseitigen Störbeeinflussungen von Nachbarzeitschlitzen ZS bzw. Nachbarkanälen vorgesehen.

FIG 3 zeigt in einem Blockschaltbild beispielhaft einen von den für jedes der zehn Frequenzbänder verwendeten DECT-Zeitrahmen FR in den Basisstationen BS, der für den Empfang von Zeitschlitzen ZS von den Kommunikationsendgeräten KE und zum Senden von Zeitschlitzen ZS an die Kommunikationsendgeräte (KE) vorgesehen ist. Hierbei ist der erste bis zwölfte Zeitschlitz ZS0..11 für das Senden der jeweiligen Basisstation BS und der dreizehnte bis vierundzwanzigste Zeitschlitz ZS 12..23 für das Empfangen der jeweiligen Basisstationen BS vorgesehen. Für das Ausführungsbeispiel sei angenommen, daß ein Kommunikationsendgerät KE für eine Datenübertragung DV1 von 64 kbit/s den fünfzehnten und sechzehnten Zeitschlitz ZS14,15, d.h. zwei unmittelbar aufeinanderfolgende Zeitschlitze ZS - in der Fachwelt als Double Slot bezeichnet - durch jeweils Aussenden einer Mac Access Request - Meldung in diesen Zeitschlitzen ZS14,15 belegt, wobei gemäß DEDT-Standard 'Double Slots' beginnend mit einem geradzahlig bezeichnet Zeitschlitz ZS - im Ausführungsbeispiel der mit ZS14 bezeichnete - zu belegen sind. In der Basisstation wird die Belegung durch eine Bearer Confirm - Meldung, die im dritten bzw. vierten Zeitschlitz ZS2,3 gesendet werden, bestätigt und annähernd gleichzeitig wird der jeweils den beiden belegten Zeitschlitzen ZS14,15; ZS2,3 vorhergehende und nachfolgende Zeitschlitz ZS13,16; ZS1,4 blockiert - in FIG 3 durch eine Schraffur angedeutet. Die Blockierung wird durch Aussenden eine Blind Slot Information - Rundsendemeldung in dem jeweiligen Funkbereich einer Basisstation BS mitgeteilt, d.h. von den in diesem Funkbereich vorhandenen Kommunikationsendgeräten KE empfangen. Durch diese Mitteilung wird eine Belegung der blockierte Zeitschlitze ZS13,16; ZS1,4 vermieden.

Eine weitere Belegung durch ein Kommunikationsendgerät KE kann nunmehr ab dem siebten Zeitschlitz ZS6 erfolgen. Beim Ausführungsbeispiel sei angenommen, daß durch ein weiteres Kommunikationsendgerät KE ein 'Double Slot' für eine weitere 64 kbit/s - Datenverbindung DV2 belegt werden soll. Hierzu wird der neunzehnte und zwanzigste Zeitschlitz ZS18,19 - DECT-gemäß beginnend mit einem geradzahlig bezeichneten Zeitschlitz ZS18 - durch Senden jeweils einer Mac Access Request - Meldung belegt und über den siebten und achten Zeitschlitz ZS6,7 bestätigt wird. Erfindungsgemäß wird der jeweils vorhergehende, d.h. der achtzehnte und sechste Zeitschlitz ZS17,5 und der jeweils nachfolgende, d.h. der einundzwanzigste und der neunte Zeitschlitz ZS20,8, in vorhergehend beschriebener Weise blockiert. Weiter Belegungen sind beim Ausführungsbeispiel nicht vorgesehen, jedoch können die verbleibenden Zeitschlitze ZS9..11 bzw. ZS21 bis 23 für weitere Belegungen genutzt werden.

Da durch das erfindungsgemäße Verfahren eine dynamische Belegung von aufeinanderfolgenden und blockierten Zeitschlitzen ZS erreicht wird, wird jeweils der blockierte Zeitschlitz ZS nur für die Dauer einer Funkverbindung blockiert und nach einem Auslösen der Funkverbindung wieder freigegeben. Durch das erfindungsgemäße Verfahren wird folglich eine bessere Nutzung der in einem Funkbereich - beim Ausführungsbeispiel beispielsweise ein Funkbereich von 5 km um die jeweilige Basisstation BS - verfügbaren Zeitschlitze ZS erreicht.

## Patentansprüche

1. Verfahren zur Belegung von Zeitschlitzen (ZS) in drahtlosen Kommunikationsnetzen (KN), insbesondere Schnurlos-Kommunikationsnetzen (KN), mit mehreren Basisstationen (BS), an die drahtlos Kommunikationsendgeräte (KE) angeschlossen sind und Funkverbindungen auf zumindest einer vorgegebenen Frequenz und in mehreren zeitmultiplexorientierten Zeitschlitzen (ZS) erfolgen,
**dadurch gekennzeichnet,**
daß bei einer Funkverbindung bei einer von einem Kommunikationsendgerät (KE) initialisierten Belegung von zumindest zwei aufeinanderfolgenden Zeitschlitzen (ZS) mit Hilfe der Basisstationen (BS) zusätzlich ein den belegten Zeitschlitzen (ZS) vorhergehender und ein nachfolgender Zeitschlitz (ZS) blockiert wird.

2. Verfahren nach Anspruch 1,
**dadurch gekennzeichnet,**
die blockierten Zeitschlitze (ZS) beim Ende einer Funkverbindung wieder freigegeben werden.

3. Verfahren nach Anspruch 1 oder 2,
**dadurch gekennzeichnet,**
daß die Blockierung eines Zeitschlitzes (ZS) vor und nach einem zugeteilten Zeitschlitz (ZS) durch eine DECT-orientierte Blind Slot Information - Rundsendemeldung in dem jeweiligen Funkbereich mitgeteilt wird.
